Europäisches Patentamt

European Patent Office

Office européen des brevets

(11) Publication number: **0 207 938**

**B1**

# EUROPEAN PATENT SPECIFICATION

(45) Date of publication of patent specification: **28.12.88**

(51) Int. Cl.⁴: **B 29 C 53/42**

(21) Application number: **85901134.8**

(22) Date of filing: **27.02.85**

(86) International application number:
**PCT/SE85/00094**

(87) International publication number:
**WO 85/03906 12.09.85 Gazette 85/20**

(54) METHOD AND APPARATUS FOR PRODUCING FIBER-REINFORCED PLASTICS BODIES.

| | |
|---|---|
| (30) Priority: **29.02.84 SE 8401099** | (73) Proprietor: **FIBER MECHANICS AB**<br>**Kungsgatan 5**<br>**S-111 43 Stockholm (SE)** |
| (43) Date of publication of application:<br>**14.01.87 Bulletin 87/03** | |
| | (72) Inventor: **DREVERT, Ulf**<br>**Västmannagatan 6**<br>**S-111 43 Stockholm (SE)** |
| (45) Publication of the grant of the patent:<br>**28.12.88 Bulletin 88/52** | |
| | (74) Representative: **Axelsson, Rolf et al**<br>**Kransell & Wennborg AB Sandhamnsgatan 42**<br>**S-115 28 Stockholm (SE)** |
| (84) Designated Contracting States:<br>**CH DE FR GB LI NL** | |
| (56) References cited:<br>**DE-C-3 015 998**<br>**US-A-3 695 971** | |

Courier Press, Leamington Spa, England.

## Description

This invention relates to a method for manufacturing a body of fibre-reinforced plastics material according to the preamble of claim 1, and apparatus therefor according to the preamble of claim 8.

Fibre-reinforced plastic composites are being used more and more in various technical fields as constructional material. The more advanced types of fibre-reinforced plastics, such as inter alia carbon-fibre resin composites, have made inroads primarily within the aeronautical and space industries and have presented therewith clear advantages over traditional types of materials, such as aluminium. One obstacle which has prevented more general use of such composites within, for example, the workshop industry is that the techniques employed in their manufacture are still undeveloped. For example, there is a lack of developed manufacturing processes which provide an end product of good quality coupled with a high degree of accuracy and a high production rate.

One available method of manufacture at present undergoing vigorous development is the fibre winding technique. This technique is used primarily in the manufacture of bodies which are rotationally symmetrical, such as tubes, shafts, reinforcing rings and cylindrical pressure vessels. The fibres are wound in a given pattern around a core, which determines the appearance of the end product. Special machines are available with which rotational speeds and feed speeds can be adjusted so as to obtain a desired pattern or fibre pitch or angle.

The choice of reinforcing material and matrices used are factors of the uttermost importance to the properties and quality of the final product. In addition hereto, winding parameters such as filament tension, winding speed, wetting rate, resin temperature and wetting method often play a fully decisive role. The quality of the final product often depends upon the amount of ingoing fibres and the amount of air inclusions present in the laminate.

That which has previously been said with regard to winding parameters is primarily applicable in so-called wet winding methods using matrix material consisting of epoxy, polyesters and vinyl esters. In the performance of such methods a dry fibre bunch is normally passed down into a bath of liquid resin so as to be impregnated therewith, whereafter the fibre bunch is passed through a number of rollers, partly to ensure that the fibres are satisfactorily impregnated and partly to check the amount of ingoing resin.

The wet winding method has many weaknesses. It is, above all, highly unreliable and produces diverse results, primarily because of the large number of parameters to be checked and controlled. Since the method employs the use of liquid thermosetting resins, which may be harmful to the health, the method is also difficult to carry out.

There has long been a desire to exchange the liquid epoxy resin for a material form in which the resin is already initially bound to the fibre bunch. This material form is generally designated "pre preg" and is primarily used in the manufacture of planar panels in the aeronautical industry. Much of the uncertainty in the manufacture can be eliminated by applying this technique and winding with narrow pre-impregnated strips. It is also a desire to replace the thermosetting resin type matrix, for example the epoxy matrix, with a thermoplastic type matrix. Among other things this is because of the risks entailed when handling epoxy and the changing properties of the epoxy matrix when used at elevated temperature and in humid atmospheres.

Suitable thermoplastic type matrix materials are commercially available. Examples of such materials are polysulphone, PS, polyethersulphone, PES, polyphenylsulphone, PPSu, polyphenylenesulphide, PPS, and polyetheretherketone, PEEK. These materials have properties which correspond to epoxy and in many cases exceed said properties. The problem, however, is to find suitable methods of manufacture suited to this type of material.

US—A—3 695 971 describes a method for forming a container body by means of winding a laminate of coextensive layers of a thermoplastic material together with a narrow strip of electrically conductive material. The electrically conductive material is subjected to a high frequency alternating electromagnetic field to generate heat therein for activating the thermoplastic material. This method is rather complicated and costly as it requires a separate heating element to be included.

In DE—A—3 015 998 an apparatus for the manufacturing of laminates is disclosed wherein heating mats are used for the curing of plastics material. The heating mats comprise carbon fibre fabric as the heating element. The carbon fibre fabric is manufactured in a separate process and is used in a special equipment which later on is separated from the laminate manufactured. This technique cannot be used in continuous winding operations.

The object of the present invention is thus to provide a method and apparatus in which composite bodies of fibre-reinforced plastics material can be manufactured in a rational and highly qualitative manner, said method enabling the bodies to be manufactured by winding in several layers around a core a strip material which comprises said plastics material and reinforcing fibres bound thereto, wherewith the superposed layers are joined together by pressing said layers against one another in a heated condition.

The method according to the present invention is characterized by using reinforcing fibres made of a material capable of conducting electric current, and by heating the material strip in conjunction with said winding operation by passing an electric current through the electrically conductive fibre material forming part of said strip so that the strip is heated internally and simultaneously throughout the thickness of the strip.

The apparatus according to the present invention is characterized in that it includes electrically conductive means which are in contact with the strip and connected to a voltage source and which are arranged to cause an electric current to flow through the conductive fibre material in the strip so as to heat the strip in conjunction with said winding operation.

Thus the solution afforded by the invention is based on the use of reinforcing fibre material, for example carbon fibres, which has a resistivity which when current passes therethrough gives rise to losses which result in the heating of the fibre filaments and the surrounding matrix material.

This heating of the fibre filaments and surrounding matrix material, departing from the fibres, i.e. from the interior of the matrix, affords important advantages over previously known heating methods, such as heating with hot air for example. When hot air is used it is difficult to control the supply of heat accurately, and hence there is a risk of damaging the material by burning the same, since all heat which is to be supplied to the interior of the material must pass through the outer layer. This problem does not occur when heating from the interior in accordance with the invention, and neither are any losses experienced as a result of heat conduction to the surroundings, but that all heat generated is usefully accounted for by the matrix material. The heating process can also be controlled relatively simply by controlling the current intensity or amperage. Since the current is also distributed substantially uniformly over all the fibres present, heating is effected smoothly over the whole width of the material strip.

For the purpose of supplying current to the strip it is preferred that, in conjunction with winding the strip onto the core, the strip is passed over two contacts which comprise an electrically conductive material and which are connected to different poles of a voltage source, wherewith heating current will flow through the strip between said contacts. Preferably, also the nearest underlying layer of the strip is heated when winding a further layer. Heating of this underlying layer can also be effected with the aid of current in the fibre material in said layer, or alternatively with the aid of heated air, since in this case the purpose is mainly to maintain the layer at an elevated temperature subsequent to being wound in a heated state. The plastics material suitably comprises a thermoplastic resin which is heated to melting point during the winding operation, while the fibre material used is suitably carbon fibre. Other electrically conductive fibre material may also be used.

In accordance with a preferred embodiment the aforesaid means comprise electrically conductive rollers or like devices. In this respect, one of said rollers suitably serves as a pressing roller for pressing the strip against the underlying layer, and also as a pole connection, said roller coacting with another roller or the like abutting the underlying layer and serving as a counterpole in order to cause a heating current to also pass through the conductive fibre material in said underlying layer.

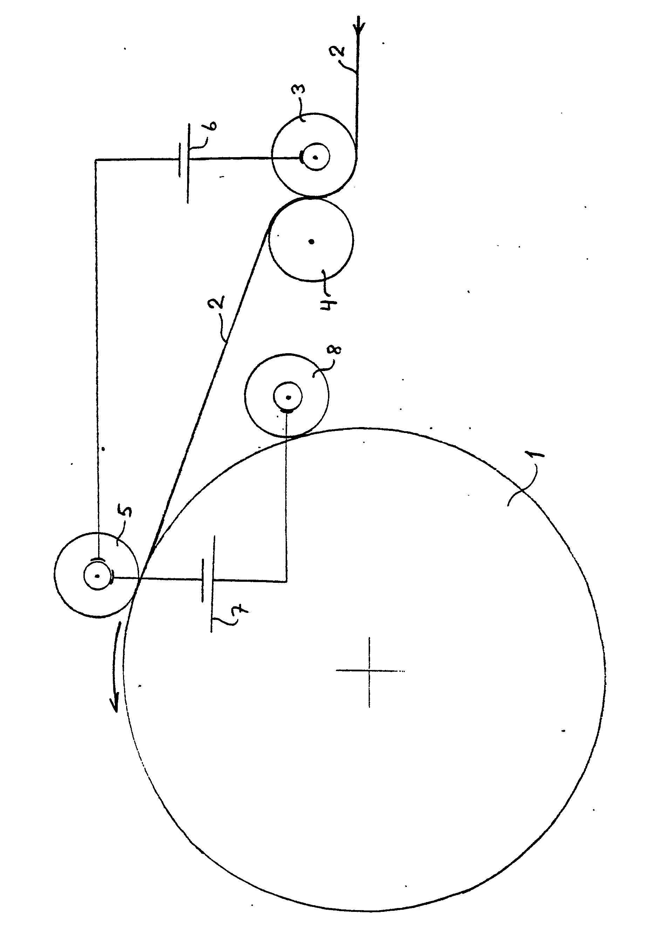

The invention will now be described in more detail with reference to the accompanying drawing, which illustrates highly schematically an embodiment of apparatus according to the invention.

In the drawing the reference 1 identifies a winding core comprising an electrically insulating material. A fibre-reinforced plastics body is to be formed on the core 1, by winding a strip 2 of plastics material having fibres bound thereto around the core 1 in a plurality of superposed layers, to form a homogeneous body. The strip 2 is taken in a dry state from a storage reel (not shown) and suitably comprises a thermoplastic resin, for example PS, PES; PPSu, PPS or PEEK, reinforced with carbon fibres. The incoming, dry strip 2 passes over a pole roller 3 and a guide roller 4, to a further pole roller 5, which in this embodiment also serves as a pressure roller for pressing the strip 2 against underlying winding layers on the core 1. As illustrated in the drawing, the pole rollers 3 and 5 are connected to opposite poles of a current source 6, for example via trailing contacts. The rollers 3 and 5 are made of a conductive material, suitably copper, resulting in a uniform supply of current from the source 6 over the whole width of the strip, this current passing substantially uniformly through the whole length of the strip, from the roller 3 to the roller 5, which serves as a collector and returns the current to the source 6.

By suitable selection of the values for the current source 1 in dependence upon the total conducting area in the strip 2 represented by the carbon fibres and the strip speed, the current in the strip 2 can be regulated so that the melting point of the plastics material is reached substantially when the strip is in contact with the combined pole and pressure roller 5. The strip 2 will then be bonded effectively to an underlying layer, adhered thereto. The aforesaid values in respect of the current source 1 and the strip speed are entirely dependent upon the nature of the strip 2, particularly its fibre content. One of normal skill in this art, however, will be able to establish suitable values for each type of strip, by calculation and/or by empirical experiment.

In order to improve adhesion and to reduce further the risk of air inclusions in the plastics body, the underlying layer on which the strip is to be wound is preferably maintained at an elevated temperature or is re-heated immediately prior to contact with the strip 2. In accordance with the illustrated embodiment, this can be achieved by also passing a current through the underlying layer, which can be effected by connecting a second current source 7 between the combined pole and pressure roller 5 and a further pole roller 8. In this case, the two material webs are in a substantially molten state at the point of contact, thereby providing an extremely good bond between the various layers, resulting in a substantially homogeneous body. The temperature of the underlying layer may also be maintained, or said underlying layer may also be re-heated with the aid of hot air, since the precision to which this heating is effected is less important than the precision required when heating the strip 2.

As an alternative to the illustrated coupling of the accumulators 6 and 7, there can be used a common accumulator which is coupled between the pole rollers 3 and 8 in a manner to pass a current between said rollers via the pressure roller 5. The combined pole and pressure roller 5 may also be replaced with a separate pole roller and a separate pressure roller.

The apparatus for carrying out the method according to the invention can be modified in several respects while retaining the central concept of the invention, in which heating of the strip to be wound is effected with the aid of a current passing through the electrically conductive reinforcing material of the strip. For example, the described rollers can be replaced with other contact means, such as brushes, trailing contacts or like devices. As will be understood, fibres of a different material to carbon may be used, for example metal fibres, provided that the resistivity is sufficiently high to achieve the requisite heating. Fibres which are not electrically conductive may also be used, provided that the fibres are provided with an electrically conductive outer layer or core. The fibre material may be provided with additives or treated in a manner which renders the material sufficiently conductive.

## Claims

1. A method for manufacturing a body of fibre-reinforced plastics material, in which a material strip (2) comprising the plastics material with reinforcing fibres bound thereto is wound in a plurality of layers onto a core (1), the respective superposed layers being bonded together by pressing said layers against one another in a heated condition, characterized by using reinforcing fibres made of a material capable of conducting electric current, and by heating the material strip (2) in conjunction with said winding operation by passing an electric current through the electrically conductive fibre material forming part of said strip so that the strip (2) is heated internally and simultaneously throughout the thickness of the strip.

2. A method according to Claim 1, characterized by passing the strip (2) in conjunction with the winding thereof on said core (1) over two contacts (3, 5) comprising electrically conductive material and connected to different poles of a voltage source (6), therewith causing a heating current to flow through the strip (2) between said contacts (3, 5).

3. A method according to Claim 1 or Claim 2, characterized by also heating the nearest underlying strip layer when winding a further layer onto said core.

4. A method according to Claim 3, characterized in that said heating is effected by passing an electric current through the conductive fibrous material in the underlying layer.

5. A method according to Claim 3, characterized by heating the underlying layer with the aid of hot air.

6. A method according to any one of Claims 1—5, characterized in that the plastics material used is a thermoplastic resin; and in that said material is heated to melting point in conjunction with the winding operation.

7. A method according to any one of. Claims 1—6, characterized in that the fibre material used is carbon fibre.

8. Apparatus for manufacturing a body of fibre-reinforced plastics material by winding strip material (2) comprising said plastics material and electrically conductive fibres bound thereto in a plurality of layers around a core (1), respective superposed layers being bonded together by pressing said layers against one another in a heated condition, characterized in that said apparatus includes electrically conductive means (3, 5) which are in contact with the strip (2) and connected to a voltage source (6) and which are arranged to cause an electric current to flow through the conductive fibre material in the strip so as to heat the strip (2) in conjunction with said winding operation.

9. Apparatus according to Claim 8, characterized in that said means comprise rollers or like devices (3, 5) comprising an electrically conductive material.

10. Apparatus according to Claim 9, characterized in that one of said rollers (5) serves as a pressure roller for pressing the strip (2) against an underlying layer and also as a pole connection, which co-acts with a further roller or like device (8) which lies against the underlying layer and which serves as a counterpole, therewith to cause a heating current to also flow through the conductive fibre material in said underlying layer.

## Patentansprüche

1. Verfahren zur Herstellung eines Körpers aus faserverstärktem Kunststoff, bei welchem Verfahren ein Bandmaterial (2), bestehend aus dem Kunststoff mit dazu gebundenen Verstärkungsfasern, in mehreren Schichten auf einen Kern (1) gewickelt wird, wobei die übereinanderliegenden Schichten dadurch zusammengefügt werden, dass sie in beheiztem Zustand gegen einander gepresst werden, dadurch gekennzeichnet, dass Verstärkungsfasern verwendet werden, welche aus einem Material bestehen, das elektrischen Strom leiten kann, und dass das Bandmaterial (2) in Verbindung mit dem Wickelvorgang beheizt wird, und zwar dadurch, dass ein elektrischer Strom durch das elektrisch leitende Fasermaterial, das ein Bestandteil des erwähnten Bandmaterials (2) ausmacht, geleitet wird, so dass das Band (2) im Inneren und gleichzeitig durch die ganze Stärke des Bandes beheizt wird.

2. Verfahren nach Anspruch 1, dadurch gekennzeichnet, dass das Band (2) in Verbindung mit der Aufwicklung desselben auf den Kern (1) über zwei aus elektrisch leitendem Material bestehende und an verschiedene Pole einer Spannungsquelle (6) angeschlossene Kontakte (3, 5) geführt wird, wobei eine Beheizungsstrom durch das Band (2) zwischen den genannten Kontakten (3, 5) fliessen wird.

3. Verfahren nach Anspruch 1 oder 2, dadurch gekennzeichnet, dass, beim Aufwickeln einer weiteren Schicht auf den erwähnten Kern, auch die nächstunterliegende Bandmaterialschicht beheizt wird..

4. Verfahren nach Anspruch 3, dadurch gekennzeichnet, dass die erwähnte Beheizung dadurch erfolgt, dass ein elektrischer Strom durch das leitende Fasermaterial in der unterliegenden Schicht geleitet wird.

5. Verfahren nach Anspruch 3, dadurch gekennzeichnet, dass die unterliegende Schicht mittels Warmluft beheizt wird.

6. Verfahren nach einem der Ansprüche 1—5, dadurch gekennzeichnet, dass als Kunststoff ein Thermoplast verwendet wird; und dass der erwähnte Kunststoff beim Wickelvorgang bis zum Schmelzpunkt beheizt wird.

7. Verfahren nach einem der Ansprüche 1—6, dadurch gekennzeichnet, dass als Fasermaterial Kohlenfasern verwendet werden.

8. Vorrichtung zur Herstellung eines Körpers aus faserverstärktem Kunststoff, dadurch, dass ein Bandmaterial (2), bestehend aus dem erwähnten Kunststoff und dazu gebundenen elektrisch leitenden Fasern, in mehreren Schichten um einen Kern (1) gewickelt wird, wobei die übereinanderliegenden Schichten dadurch zusammengefügt werden, dass die erwähnten Schichten in beheiztem Zustand gegen einander gepresst werden, dadurch gekennzeichnet, dass die erwähnte Vorrichtung mit dem Band (2) in Kontakt stehende und an eine Spannungsquelle (6) angeschlossene, elektrisch leitende Glieder (3, 5) umfasst, welche eingerichtet sind, einen elektrischen Strom durch das Fasermaterial im Band fliessen zu lassen, um das Band (2) beim Wickelvorgang zu beheizen.

9. Vorrichtung nach Anspruch 8, dadurch gekennzeichnet, dass die erwähnten Glieder aus Rollen oder ähnlichen Geräten (3, 5) aus elektrisch leitendem Material bestehen.

10. Vorrichtung nach Anspruch 9, dadurch gekennzeichnet, dass eine der erwähnten Rollen (5) als Anpressrolle zur Anpressung des Bandes (2) gegen eine unterliegende Schicht und auch als Polanschluss dient, welcher mit einer weiteren, gegen die unterliegende Schicht anliegenden und als Gegenpol dienenden Rolle (8) oder dergleichen zusammenwirkt, um einen Beheizungsstrom auch durch des leitende Fasermaterial in der erwähnten unterliegenden Schicht fliessen zu lassen.

**Revendications**

1. Procédé de fabrication d'un corps en matière plastique renforcée de fibres, dans lequel une bande de matériau (2), comprenant la matière plastique avec des fibres de renforcement reliées à celle-ci, est enroulée en plusieurs couches sur un tambour (1), les couches superposées respectives étant liées entre elles par mise sous pression des couches l'une contre l'autre, les couches étant chauffées, caractérisé par l'utilisation de fibres de renforcement réalisées en matériau capable de conduire un courant électrique et par le réchauffage de la bande de matériau (2) conjointement à l'opération d'enroulage en faisant passer un courant électrique à travers le matériau en fibres conductrices constituant une partie de la bande de façon telle que la bande (2) est chauffée intérieurement et simultanément sur toute l'épaisseur de la bande.

2. Procédé selon la revendication 1, caractérisé par le passage de la bande (2), conjointement à l'enroulement de celle-ci sur le tambour (1), sur deux contacts (3, 5) comprenant un matériau conducteur de l'électricité et reliés à des pôles différents d'une source de tension (6), ceci entraînant le passage d'un courant de réchauffage à travers la bande (2) entre les contacts (3, 5).

3. Procédé selon la revendication 1 ou 2, caractérisé en ce que l'on réchauffage également la couche formant bande sous-jacente la plus proche lorsqu'on enroule une couche supplémentaire sur le tambour.

4. Procédé selon la revendication 3, caractérisé en ce que le réchauffage est effectué par le passage d'un courant électrique à travers la matière fibreuse conductrice dans la couche sous-jacente.

5. Procédé selon la revendication 3, caractérisé en ce que l'on chauffe la couche sous-jacente à l'aide d'air chaud.

6. Procédé selon l'une quelconque des revendications 1 à 5, caractérisé en ce que la matière plastique utilisée est une résine thermoplastique; et en ce que le matériau est chauffé jusqu'à son point de fusion conjointement à l'opération d'enroulage.

7. Procédé selon l'une quelconque des revendications 1 à 6, caractérisé en ce que la matière fibreuse utilisée est une fibre de carbone.

8. Appareil pour fabriquer un corps de matière plastique renforcée de fibres par enroulement en plusieurs couches autour d'un tambour (1) d'un matériau en bande (2) comprenant ladite matière plastique et des fibres conductrices de l'électricité liées à celle-ci, les couches superposées respectives étant reliées ensemble en appuyant les couches l'une contre l'autre, celles-ci étant chauffées, caractérisé en ce que l'appareil comporte des moyens conducteurs de l'électricité (3, 5) qui sont en contact avec la bande (2) et reliés à une source de tension (6) et qui sont agencés pour provoquer le passage d'un courant électrique à travers le matériau en fibres conductrices dans la bande, de façon à chauffer la bande (2) conjointement à l'opération d'enroulage.

9. Appareil selon la revendication 8, caractérisé en ce que les moyens comportent des rouleaux ou des dispositifs analogiques (3, 5) comprenant un matériau conducteur de l'électricité.

10. Appareil selon la revendication 9, caractérisé en ce qu'un premier rouleau (5) sert de rouleau presseur pour presser la bande (2) contre une couche sous-jacente et également de liaison avec un pôle, le premier rouleau coopérant avec un rouleau ou un dispositif analogue (8) supplémentaire qui est situé contre la couche sous-jacente et qui sert de pôle opposé, ceci provoquant également le passage d'un courant de chauffage à travers le matériau en fibres conductrices dans la couche sous-jacente.

1